# EUROPÄISCHE PATENTSCHRIFT

(11) **EP 0 489 242 B1**
(45) Veröffentlichungstag und Bekanntmachung des Hinweises auf die Patenterteilung: **22.02.1995**
(21) Anmeldenummer: 91117248.4
(22) Anmeldetag: 10.10.1991
(51) Int. Cl.: G01G 19/08

(54) **Container-Wägevorrichtung**
Device for weighing containers
Dispositif pour peser les conteneurs

(30) Priorität: 01.12.1990 DE 4038374
(43) Veröffentlichungstag der Anmeldung: 10.06.1992
(73) Patentinhaber: S+P ENTSORGUNGSTECHNOLOGIE GmbH, D-56587 Oberhonnefeld-Gierend (DE)
(72) Erfinder: Schneider, Heinz-Gerd, W-5457 Oberhonnefeld (DE); Pilz, Reinhard, W-6270 Idstein (DE); Klein, Heinz, W-5461 Rossbach (DE)
(74) Vertreter: Hentschel, Peter, Dipl.-Ing.

(56) Entgegenhaltungen:
- EP-A- 0 292 866
- DE-A- 3 826 512
- DE-A- 4 026 561
- US-A- 2 820 624

## Beschreibung

Die Erfindung betrifft eine Container-Wägevorrichtung an einem Container-Hub-Fahrzeug, dessen Container-Hubeinrichtung ein Paar heb- und senkbar am Fahrzeugheck angelenkter Hubarme aufweist, welche an ihren freien Enden Einrichtungen zum Koppeln mit an die Container einhängbare Hubketten oder -seile aufweisen, wobei an jedem Hubarmende eine Wägevorrichtung auf einer rechtwinklig zur Hubarmlänge und waagerecht verlaufenden Achse pendelnd aufgesteckt ist und aus einer Rahmenkonstruktion besteht, in der eine Druckmeßdose aufgenommen ist und die am unteren Ende ein waagebalkenartig parallel zur Hubebene der Hubarme schwenkbares Koppelglied mittig gelagert aufweist, an deren Enden Löcher zur Aufnahme von Wägeseilen angeordnet sind.

Für das Wägen von Containern gibt es bisher keine befriedigende Vorrichtung. Ein Hindernis bilden die vielen unterschiedlichen Ketten- oder Seil-Einhänge- und Hubvorrichtungen; jeder Hersteller benutzt andere Ausführungen.

Ein anderes Problem bilden die einerseits äußerst rauhen, andererseits besonders vielseitigen Einsatzverhältnisse von Containern.

Ein und dasselbe Fahrzeug muß je nach Bedarf Container unterschiedlichen Fassungsvermögens heben können. Dabei variiert in der Regel die Breite der Container, die in Größenstufen genormt sind.

Eine symmetrische Befüllung der Container ist je nach Füllgut bestenfalls zufällig verwirklicht. Da Container u.a. auch z.B. mit Sperrmüll, Bauschutt, Metallschrott usw. befüllt werden, ist die "schiefe" Befüllung nahezu der Regelfall.

Wechselnde Containerbreiten und schiefe Befüllung haben zur Folge, daß die Ketten oder Seile untereinander ungleichmäßig und außerdem von anderen Kräften als der, die der reinen Gewichtslast entspicht, beansprucht werden.

Bei einer bekannten im Gebrauch befindlichen Container-Wägevorrichtung sind an Hubarmen Dehnungsmeßstreifen befestigt. Solche Dehnungsmeßstreifen selbst sind gegenüber dem rauhen Betrieb sehr empfindlich. Da sie Sensoren sind, welche die minimalen Materialdehnungen bei deren Belastung anzeigen, sind sie mit ihrer Anzeige von den Materialeigenschaften sowie von der Querschnittsform der Hubarme abhängig.

Infolgedessen erfassen Dehnungsmeßstreifen nur sekundäre Wirkungen, die von vielen Faktoren beeinflußt werden. Sie können nicht als Sensoren für eine allgemein einsetzbare Wägevorrichtung benutzt werden, sondern müssen jedem speziellen Fahrzeug angepaßt werden.

Hinzu kommt, daß die Hubarme bekanntlich um einen festen Punkt am Fahrzeug höhenverschwenkbar angelenkt sind. Mit der an ihren freien Enden hängenden Containerlast nehmen sie veränderliche Winkelstellungen zur Waagerechten ein. Somit ist die Biegebelastung der Hubarme, welche die Ursache der Materialdehnung ist, eine von der Winkellage der Hubarme abhängige Größe.

Bei kleineren Containern verlaufen die Ketten oder Seile von den Hubarmenden schräg zum Container, so daß zur Biegebeanspruchung in der Lotebene noch eine zusätzliche Biegebelastung quer zur Lotebene hinzu kommt und die Anzeigen der Dehnungsmeßstreifen verfälscht.

Da der Dehnungsmeßstreifen, auch wenn er in ein Koppel-Zugelement eingebaut wäre, nur mehrfach vom Containergewicht abgeleitete und vielfach beeinflußte Effekte des Gewichtes erfaßt, ist er äußerst ungenau. Außerdem sind mechanische Empfindlichkeit und die Notwendigkeit zu fahrzeugspezifischer Anpassung Hindernisse, die einem wirtschaftlichen Einsatz entgegenstehen.

Andere, bekannte und in Gebrauch befindliche Container-Wägevorrichtungen der eingangs genannten Art bedienen sich als gewichtserfassendem Sensor der bekannten Druckmeßdose. Dabei werden an den Hubarmenden spezielle Aufnahmeeinrichtungen für diese Druckmeßdosen angeschweißt. Zusätzlich werden von den üblichen Ketten oder Seilen unabhängige Seile benötigt, die die Druckmeßdose belasten, wenn sie zwecks Wägung mit dem Container gekoppelt werden und dieser dazu angehoben wird.

Auch wenn die Wägeergebnisse dieser Wägevorrichtung viel besser bzw. genauer sind als sie bei Wägevorrichtungen mit Dehnungsmeßstreifen je erzielbar wären, kann von befriedigender Genauigkeit keine Rede sein.

Bei einer bekannten Ausführung der eingangs genannten Art ist am Hubarmende eine Art Haken angeschweißt, welcher am unteren Ende -unterhalb der normalen Tragachse- eine zweite Achse als "Wäge-Achse" aufnimmt. Auf dieser Wäge-Achse ist als Aufnahmeeinrichtung für die Druckmeßdose die Doppel-Rahmen-Konstruktion mit ihrem oberen Ende, in der Hubebene der Hubarme pendelnd, aufgehängt.

Diese Rahmenkonstruktion hat einen Oberrahmen, dessen oberes Ende auf der Wägeachse hängt und dessen unteres Ende ein Querwiderlager mit Auflageplatte für die Unterseite der Druckmeßdose aufweist.

Dieser Oberrahmen wird von unten her zangenartig von zwei Schenkeln eines Unterrahmens eingefaßt. Am oberen Ende hat der Unterrahmen einen Querbolzen, der die Oberseite der Druckmeßdose über eine zwischengelegte Druckplatte beaufschlagt.

Am unteren Ende trägt der zangenartige Unterrahmen den Querbolzen, auf dem zwischen den Zangenschenkeln das waagebalkenartige Koppelglied mittig gelagtert ist. Das Koppelglied hat symmetrisch zum Querbolzen zwei Einhängelöcher für Wägeseile. Diese Wägeseile sind zusätzliche Bauteile, die nur für den Wägevorgang an den jeweiligen Containern an- bzw. abgekoppelt werden müssen; zum Heben sind die ursprünglichen Hubseile oder -ketten zu verwenden.

Solange diese bekannte Wägevorrichtung bei der Wägung in der Lotebene belastet wird, ist die Genauigkeit der Wägung in Anbetracht des sehr rauhen Containerbetriebes erstaunlich hoch.

Die Situation, daß die belasteten Wägeseile an einer Containerseite gemeinsam eine Lotebene definieren, tritt nur als Sonderfall ein, wenn der Hubarmabstand und die jeweilige Containerbreite "zueinanderpassen". Wie eingangs bereits erläutert wurde, muß in der Praxis mit unterschiedlich großen, d.h. breiten Containern umgegangen werden. Deren Wägeseile ziehen dann "schräg" am Koppelglied.

Es gibt noch eine andere Ausnahmesituation. In der Praxis sind nämlich einige Container-Hubfahrzeuge in Betrieb, deren Hubarme passend zur jeweils zu handhabenden Containergröße, d.h.-Breite, abstandsverstellbar sind. Auch mit diesen bekannten Containerfahrzeugen kann man durch Verstellen der Hubarme erreichen, daß die Container-Wägevorrichtung in der Lotebene belastet wird. Es werden dann Wägungen mit guter Genauigkeit erzielt.

Allerdings sind derartige Spezialfahrzeuge naturgemäß wesentlich teurer als Fahrzeuge ohne Abstandsverstellbarkeit der Hubarme. Eine allgemeine Anwendbarkeit, etwa durch Umbau der anderen vorhandenen Fahrzeuge, ist nicht möglich. Es darf außerdem nicht vergessen werden, daß die Hubarmverstellung ein Zeit und damit Geld kostender zusätzlicher Arbeitsgang beim Umgang mit den Containern darstellt, der somit schon aus diesem Grund abzulehnen ist.

Somit wird die im einzelnen beschriebene Wägevorrichtung der eingangs genannten Art in der Praxis überwiegend mit "schräg" zur Lotebene ziehende Wägeseilen betrieben. Zugelassen werden Schräglagen der von den Wägeseilen an einer Containerseite definierten Lastebene von 14° zum Lot. Daraus bedingt entstehen in der Wägevorrichtung, die dabei mit ihrer Gesamtlänge bzw. Höhe auf Biegung beansprucht wird, Verkantungen zwischen Koppelglied und Unterrahmen, weitere Verkantungskräfte zwischen Unterrahmen und Oberrahmen sowie Verkantungskräfte zwischen dem Oberrahmen und der Wägeachse. Das ergibt in Anbetracht der hohen Containerlasten bis z.B. 10 t, also etwa 5 t je Wägevorrichtung, erhebliche Lagerreibungskräfte zwischen Wägeachse und Oberrahmen sowie dem Bolzen des Unterrahmens und dem Koppelglied. Außerdem kommen Reibungskräfte zwischen Oberrahmen und Unterrahmen hinzu.

Das Meßergebnis wird daher ständig von den nicht vereinheitlichbaren, sondern beim gleichen Container von Zufällen abhängigen Verkantungs-Reibungskräften verfälscht. Die ganze Wägevorrichtung hängt in der Hubebene vom Hubarm aus nach unten und am unteren Ende, dem Koppelglied, ziehen die Hubketten schräg zur Hubebene, haben also die Tendenz, die Rahmenkonstruktion quer zur Hubebene zu verbiegen. Die Lagerreibung zwischen der Doppelrahmenkonstruktion und den Lagern ist daher stets zufallsabhängig, d.h. die Störgrößen sind groß.

Besonders bei "schräg" ziehenden Hubketten bei kleinen Containern geht deren Last-Wirkungslinie niemals direkt durch die Druckmeßdose; günstigstenfalls kreuzt sie die Längsmittellinie irgendwo auf deren Länge und auf dem Wege zur Wägeachse.

Zufällige, vielseitige Reibungen und Biegemomente verhindern daher Gewichtsmeßergebnisse konstanter Genauigkeit.

Auch die Handhabung dieser bekannten Wägevorrichtung ist zeitraubend und umständlich. Wenn gewogen werden soll, muß der Container zunächst an den Wägeseilen eingehängt, dann angehoben und dann gewogen werden. Danach muß wieder abgesenkt und von den Wägeseilen abgekoppelt werden. Wenn die Wägeseile dann festgelegt sind, damit sie den Hubseilen oder -ketten nicht im Wege sind, kann das eigentliche Heben und Laden durch das Ankoppeln der Hubseile oder -ketten begonnen werden. Diese Arbeitsweise ist äußerst zeitraubend. Wenn etwa noch leergekippte Container leer "zurückgewogen" werden müssen, dann verdoppelt sich dieser zusätzliche Arbeitsaufwand.

Wie schon erwähnt, ist der "Containerbetrieb" äußerst rauh. Somit kann auch eine Druckmeßdose schadhaft werden. Bei den bekannten Wägevorrichtungen ist sie durch die Doppelrahmenkonstruktion schwer zugänglich, so daß auch beim Austausch einer Druckmeßdose viel Arbeit anfällt.

Die hohen Biege- und Verkantungskräfte, denen die diversen Bauteile beim Wägen unter rauhen Bedingungen ausgesetzt sind, sind derart hoch, daß auch bei teuersten Werkstoffen rascher Verschleiß eintritt. Die Wartungsanfälligkeit ist sehr hoch und die Lebensdauer sehr kurz.

Generell ist es ein Nachteil, die Aufnahmeeinrichtung für die Wägeeinrichtung am Hubarm anzuschweißen. Dadurch werden typenspezifische, d.h. den jeweiligen Hubarmen angepaßte Aufnahmeeinrichtungen erforderlich, d.h. es ist unmöglich, eine für alle Container-Hubfahrzeuge passende, einheitliche Wägevorrichtung zu schaffen.

Die DE-OS 38 26 512 offenbart eine "Wägevorrichtung zum Erfassen und ein Wiegesystem zum Weiterverarbeiten von Wägedaten". Dabei wird alternativ eine Achslastwaage oder eine "Kraftmeßvorrichtung" auf der Aufnahmevorrichtung -gemeint sind die Hubarme- erwähnt.

Achslastwaagen sind stationäre Einrichtungen, bei denen die geschilderten Probleme nicht auftreten.

Wie die Kraftmeßvorrichtung an den Hubarmen beschaffen sein soll, ist dieser Druckschrift nicht zu entnehmen. Es muß daher davon ausgegangen werden, daß sie zu einer der beiden geschilderten Vorrichtungsarten -Dehnungsmeßstreifen oder Druckmeßdose- gehört.

Die in der DE-OS beschriebene Wäge-Daten-Erfassung und -Verarbeitung ändert nichts an den Fehlern, die beiden Vorrichtungsarten anhaften.

Der Erfindung liegt die Aufgabe zugrunde, eine Container-Wägevorrichtung der eingangs genannten Art zu schaffen, die für alle gebräuchlichen Container-Hubfahrzeuge verwendbar ist, die unter allen vorkommenden Arbeitsbedingungen genaue Gewichtserfassungen gewährleistet, die leicht und schnell zu bedienen und einfach zu warten, langlebig sowie für vorhandene Container-Hubfahrzeuge durch Nachrüsten verwendbar ist.

Zur Lösung dieser Aufgabe kennzeichnet sich die eingangs genannte Container-Wägevorrichtung erfindungsgemäß dadurch, daß die Rahmenkonstruktion aus einer hochkantstehend rechteckförmigen Platte besteht, die oben und unten dachähnliche, symmetrisch zur Rechteck-Längsmittellinie angeordnete und angeformte Verlängerungen aufweist und die in der Mitte eine große, im wesentlichen rechteckförmige Ausnehmung aufweist, daß die Platte etwa auf der Mitte ihrer Länge und exakt auf der Mitte ihrer Breite mittels einer, außen etwa quaderförmigen, mit Spiel in der Ausnehmung der Platte gehaltenen Bundnabe, deren Zylinderachse in der Ausgangslage rechtwinklig durch die Längsmittellinie verläuft, auf die zum Heben vorgesehene Tragachse des jeweiligen Hubarmes parallel zur Hubebene der Hubarme pendelnd aufgenommen ist, daß auf der Oberseite der quaderförmigen Außenform der Bundnabe eine auf ihrer Oberseite breitwinklig keilförmig genutete Leiste (Pfanne) mit rechtwinklig zur Längsmittellinie der Platte verlaufender Keilscheitellinie befestigt ist, daß die Druckmeßdose mit ihrer Auflage- oder Widerlagerseite nach oben weisend und mit ihrer Druckachse koaxial zur Längsmittellinie der Platte am oberen Ende der Ausnehmung der Platte befestigt ist, daß die nach unten weisende Druck- oder Belastungsplatte der Druckmeßdose von oben auf einer, zwischen zwei beidseitig die Ausnehmung der Platte oben überdeckenden Halteplatten begrenzt höhenbeweglich in der Ausnehmung geführten Leiste (Schneide) aufliegt, deren unteres Ende keilförmig mit spitzerem Winkel als die Pfanne in dieser Pfanne linienförmig aufliegt, daß die Halteplatten nach unten über die Leiste mit Pfanne ragen, daß die Leiste mit der Pfanne mit Spiel zwischen den Halteplatten geführt ist, daß die in das Koppelglied eingehängten Seile oder Ketten die Hubseile oder -ketten sind, daß die Platte mit der Druckmeßdose und der Schneide usw. selbstätig mit ihrer Längsmittellinie in eine vom Lot abweichende Schräglage einstellbar ist, wenn die in den jeweiligen Container eingehängten Hubseile belastet eine vom Lot abweichende Ebene definieren, und daß dabei die Längsmittellinie der Platte und der Druckmeßdose eine mit der von den gespannten Hubketten oder -seilen definierten Ebene fluchtende Lage einnimmt.

Die erfindungsgemäß ausgebildete Wägevorrichtung kann für alle auf dem Markt befindlichen Container-Fahrzeuge verwendet werden, weil alle diese Fahrzeuge am Hubarmende eine Einhängeeinrichtung haben, die auf einer Tragachse am Hubarmende aufgenommen ist. Es braucht nur die Einhängeeinrichtung von der Tragachse entfernt und an deren Stelle die Platte, bzw. die in ihr aufgenommene Bundnabe aufgesteckt zu werden, und die Wägevorrichtung nach der Erfindung ist einsatzbereit.

Der Aufbau der Wägevorrichtung nach der Erfindung erlaubt eine genaue Gewichtserfassung. Die Druckmeßdose stellt sich immer in die Lastlinie ein. Die Platte wird niemals von Querkräften oder kreuzenden Lastlinien beansprucht. Die Druckmeßdose mißt daher immer das Gewicht und nicht eine davon abgeleitete, andere Größe oder durch Winkel oder Schräglagen bedingte Gewichtskomponenten. Die Lastlinie läuft immer, auch bei beliebiger Winkelstellung der Hubarme, koaxial zur Mittellinie durch die Druckmeßdose. Da alle dazu erforderlichen Stellbewegungen, etwa die Drehung der Bundnabe auf der Achse, so reibungsarm wie nur möglich vor sich gehen, gibt es keine Meßfehler durch Reibung. Auch extrem einseitig oder schief befüllte Container können das Gewichtsmeßergebnis nicht verfälschen, weil das am unteren Ende der Platte mittels Bolzens gehaltene, waagebalkenartige Koppelglied stets dafür sorgt, daß die Containerlast, bzw. deren Lastlinie durch den Bolzen über die Platte koaxial zur Mittellinie in die Druckmeßdose eingeleitet wird.

Die bereits eingangs genannte, bekannte Wägevorrichtung kann diese Wirkung nicht oder nur bedingt erfüllen, weil die schräg ziehenden Seile oder Ketten Verkantungen und Verklemmungen mit dem Bolzen hervorrufen.

Die erfindungsgemäß ausgebildete Wägevorrichtung arbeitet daher mit bisher nicht erzielbarer Genauigkeit.

Die Wägevorrichtung nach der Erfindung benötigt daher, außer der Auslösung der Ergebniserfassung des Meßwertes der Druckmeßdose, keine weiteren, besonderen Arbeiten.

Besondere Wägeseile gibt es nicht. Die normalen Hubketten oder -Seile, die bereits am Koppelglied angehängt sind, werden, wie zum Heben des Containers erforderlich, mit dem Container verbunden. Nun kann am Boden, bzw. in Bodennähe, während jeder Phase des Hubvorganges bis hin zur Position des Containers auf dem Fahrzeug -sofern der Container keine Berührung mit der Ladefläche bzw. dem Erdboden hat-, gewogen werden. Wichtig ist nur, daß Trägheitskräfte vermieden werden, z.B. dadurch, daß der Hubvorgang zur Wägung kurz unterbrochen wird.

Im Gegensatz zu dem bisher üblichen, zweifachen Einhängen des Containers, einmal in Wägeseile und danach in Hubseile oder -ketten zum Einstellen bestimmter Winkellagen der Hubarme usw., ist das Wägen erfindungsgemäß einfach und schnell durchführbar.

Wenn man erfindungsgemäß ausgebildete Wägevorrichtungen auswechseln muß, dann braucht man sie nur mit der Nabe von der Tragachse abzuziehen. Bei den bekannten, angeschweißten Wägevorrichtungen ist das naturgemäß nicht möglich, so daß bei Reparaturen usw. viel Zeit aufgebracht werden mußte, während deren das betreffende Fahrzeug nicht benutzbar war.

Die erfindungsgemäß ausgebildete Wärevorrichtung ist fast universell für alle vorhandenen Container-Fahrzeuge verwendbar, ggfs. durch Nachrüsten mit einer Tragachse. Sie arbeitet einfach und schnell und mit hoher Genauigkeit. An vorhandene Datenerfassungseinrichtungen kann ihre Druckmeßdose beliebig angeschlossen werden.

Bei der erfinderischen Ausbildung stellt sich die gesamte Platte mit der Druckmeßdose usw. durch die Kipparbeit der Nabe relativ zur Platte bei Belastung von selbst fluchtend zur Ebene der belasteten Ketten -d.h. schräg zur Nabenachse- ein. Die querkraftfreie Belastung der Druckmeßdose gewährleistet die keilförmige Pfanne auf der Nabe und die Schneide unter der Druckmeßdose.

Hat ein Container die Maximalbreite, dann bildet die Lastlinie mit der Nabenachse einen rechten Winkel; sind die Container schmäler, so ändert sich dieser Winkel.

Da Containerbreiten entsprechend ihrer Größe genormt sind, stellen sich bei gleichgroßen, bzw. -breiten Containern auch immer wieder gleiche Schräglagen der Lastlinie zur Nabenachse ein.

Bei Schräglagen der Lastlinie ergibt sich ein längs der Nabenachse weisender Querlastvektor, dessen Größe von der Last und vom Winkel zwischen Nabenachse und Lastlinie gemäß den Winkelfunktionen definiert ist.

Die Druckmeßdose mißt eine größere als die tatsächliche Last, wenn dieser Winkel von 90° abweicht, bzw. wenn der längs der Nabenachse verlaufende Lastvektor nicht gleich Null ist.

Das tatsächliche Gewicht ergibt sich aus dem Produkt, gemessene Last mal Cosinus des Winkels zwischen Lot- und Lastebene.

Wegen der Normung der Containerbreiten ergibt sich bekanntlich jeweils der gleiche Winkel, so daß beim Wägen kleiner Container nur die zur jeweiligen Containerbreite gehörende Winkelfunktion in die Datenerfassung eingegeben werden muß. So z.B. Container 1, Winkel = 0, gemessene Last gleich Gewicht oder Container 2, Winkel = α, tatsächliche Last gleich gemessene Last mal cos α; usw.

Beim Wägen wird also nur die jeweilige Containergröße eingestellt und dann gewogen.

Der Vorteil dieser Ausgestaltung liegt darin, daß tatsächlich nur nach Einhängen und Einstellen der Containergröße fehlerfrei und ohne weiteren Aufwand gewogen werden kann.

Bei den Weiterbildungen gemäß Anspruch 3 und 4 wird fluchtende Einstellung der Mittellnie der Druckmeßdose der Platte usw. ins Lot eventuell zur Ebene der belasteten Hubketten oder -Seile dadurch verwirklicht, daß die Nabe auf einer entsprechend verlängerten Tragachse oder dem anstelle derselben vorgesehenen zylindrischen Stab, selbsttätig oder auch von Hand soweit längs der Tragachse bzw. des Stabes verschoben wird, bis die von den belasteten Ketten definierte Ebene eine Lotebene ist. So wird auch die durch die Druckmeßdose gehende Lastlinie eine Lotlinie, und die Wägung erfolgt querkraftfrei, unabhängig davon, ob ein breiter oder ein schmaler Container gewogen werden soll.

Das Prinzip "Schneide und Pfanne" wird dabei nicht etwa entbehrlich, sondern bewirkt, z.B. bei schräg stehendem Containerfahrzeug, d.h. wenn dessen Hubende nicht in der Waagerechten steht, verkantungsfreies und damit genaues Messen.

Bei der Weiterbildung nach Anspruch 5 wird einerseits die Kippbarkeit der Nabe bei der bevorzugten Ausbildung erreicht und gleichzeitig durch die Stufe ein zu starkes Kippen begrenzt.

Die Weiterbildung nach Anspruch 6 erlaubt es, die Druckmeßdose, die ja infolge des rauhen Betriebes ebenfalls als Verschleißteil zu gelten hat, durch Lösen der Schraube schnell und einfach auszuwechseln.

Die Ausgestaltung nach Anspruch 7 verbessert die Meßgenauigkeit, weil die Basis der Druckmeßdose satt aufliegt.

Ein Ausführungsbeispiel der erfindungsgemäß ausgebildeten Container-Wägevorrichtung ist in den Zeichnungen dargestellt. Es zeigt:
- Fig. 1 -: eine Schemafrontansicht der Container-Wägevorrichtung,
- Fig. 2 -: eine Schema-Schnittansicht, bei längs der Linie II-II in Fig. 1 verlaufender Schnittebene,
- Fig. 3 -: die Darstellung gemäß Fig. 2 bei "schrägem" Zug und
- Fig. 4 -: das Koppelglied mit Bolzen in Seitenansicht.

Die Figuren zeigen eine Container-Wägevorrichtung W, die mittels einer Bundnabe 1 auf eine Tragachse T am freien Ende eines Hubarmes H eines nicht gezeigten Container-Hubfahrzeuges beliebiger Bauart aufsteckbar ist.

Außen ist die Bundnabe quaderförmig ausgebildet. Auf ihrer Oberseite ist eine Pfanne 2 befestigt, die aus einer oben keilförmig genuteten Leiste geringer Höhe und mit rechtwinklig zur Nabenachse verlaufender Keil-Scheitellinie besteht.

In die Pfanne 2 greift eine Schneide 3 ein, die aus einer unten vergleichsweise spitzwinklig keilförmig geformten Leiste besteht.

Die Schneide 3 ist in der Pfanne 2 um die Keil- und Schneiden-Scheitellinie kippbar.

Die Bundnabe 1 sowie Pfanne 2 und Schneide 3 sind in einer Ausnehmung 4 einer hochkantstehend rechteckförmigen, mit einer oberen und einer unteren dachähnlich gestalteten Verlängerung 5a bzw. 5b versehenen Platte 5 aufgenommen.

Auf der Längsmittellinie L der Platte 5 ist in der unteren Verlängerung 5b ein waagebalkenartiges Koppelglied K mit Drehpunkt auf der Längsmittellinie L schwenkbar auf einem Bolzen 13 gehalten und mit Einhängeöffnungen 6, 7 für zum Container führende Hubseile oder Ketten (nicht gezeigt) versehen.

Auf dem oberen Ende der Schneide 3 liegt die Druck- oder Belastungseite einer Kraft- bzw. Druckmeßdose 8 auf, die im oberen Endbereich der Ausnehmung 4 angeordnet ist und sich mit ihrer Widerlagerseite auf der Kante der Ausnehmung sowie auf die Unterkanten von zwei beidseitig auf die obere Verlängerung 5a aufgesetzten Platten 14 abstützt.

Zur Befestigung der Druckmeßdose 8 dient eine Schraube 11; Lösen derselben erlaubt freies Entnehmen bzw. Auswechseln.

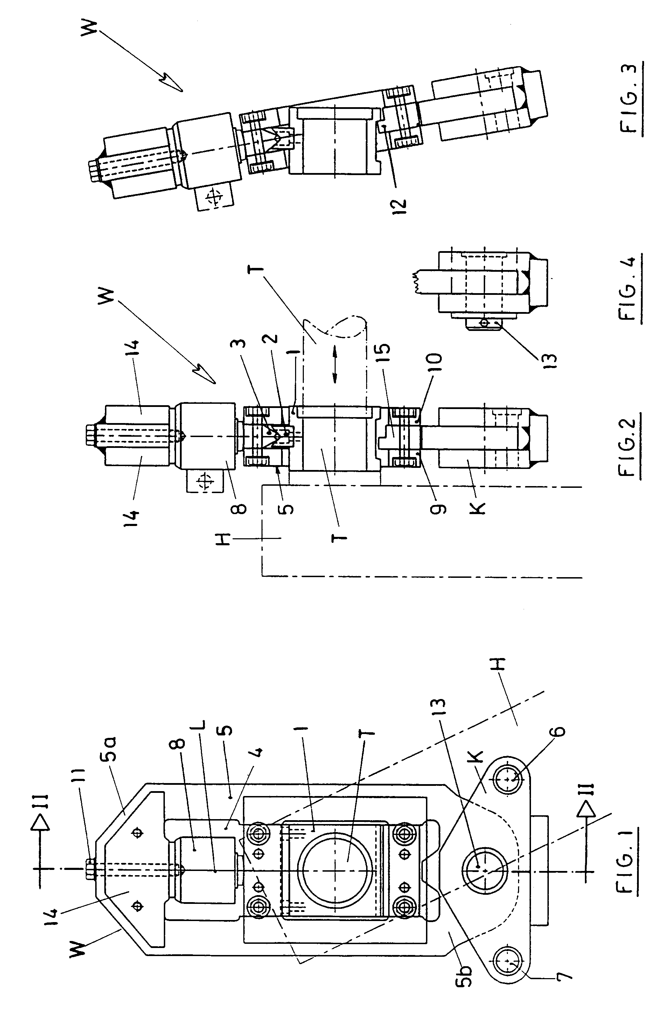

Zwei beidseitig auf die Platte 5 gesetzte, rechteckförmige Rahmen 9, 10 bilden oben mit ihrem Querteil Führungsleisten für die Schneide 3 und die Pfanne 2, wobei die Leiste der Pfanne 2 Seitenspiel hat, d.h. so schmal ausgebildet ist, daß die Position gemäß Fig. 3 möglich ist.

Eine untere Querleiste der Rahmen führt eine Leiste 15 mit einer oberen Stufe 12. Diese faßt hinter die Bunde der Bundnabe 1 und begrenzt so unzulässige Kippstellungen der Platte 5.

Die Wägevorrichtung W stellt sich mit ihrer Druckmeßdose 8 und der Platte 5 und dem Koppelglied K stets unter Last in die Lastebene ein, sei sie lotrecht oder schräg (Fig. 3), weil Schneide 3 und Pfanne 2 eine Kippung erlauben.

Quer-Verkantungskräfte usw. fallen weg, die Wägung ist sehr genau.

Auch das Koppelglied K kann wegen Fehlens jeglicher Verkantungskräfte effektiv waagebalkenartig um den Bolzen 13 schwenken und so einseitige Containerbeladungen ausgleichen.

Die Tragachse T kann -siehe strich-punktierte Darstellung in Fig. 2- verlängert oder -siehe gestrichelte Darstellung in Fig. 2- als Hubarm H zu Hubarm H durchgehender zylinderischer Stab ausgebildet sein. Die Bundnabe 1 kann sich dann so auf der Tragachse T verschieben, daß die Lastebene eine Lotebene wird, bzw. ist. Steht dabei jedoch das Container-Hubfahrzeug oder der Container schräg, dann garantieren Pfanne 2 und Schneide 3 ein "Einpendeln" und eine querkraftfreie, genaue Gewichtsbestimmung.

## Patentansprüche

1. Container-Wägevorrichtung an einem Container-Hub-Fahrzeug, dessen Container-Hubeinrichtung ein Paar heb- und senkbar am Fahrzeugheck angelenkter Hubarme (H) aufweist, welche an ihren freien Enden Einrichtungen zum Koppeln mit an die Container einhängbaren Hubketten oder -seilen aufweisen, wobei an jedem Hubarmende eine Wägevorrichtung (W) auf einer rechtwinklig zur Hubarmlänge und waagerecht verlaufenden Achse (T) pendelnd aufgesteckt ist und aus einer Rahmenkonstruktion besteht, in der eine Druckmeßdose (8) aufgenommen ist und die am unteren Ende ein waagebalkenartig parallel zur Hubebene der Hubarme (H) schwenkbares Koppelglied (K) mittig gelagert aufweist, an deren Enden Löcher zur Aufnahme von Wägeseilen angeordnet sind,
dadurch gekennzeichnet,
daß die Rahmenkonstruktion aus einer hochstehenden Platte (5) besteht, die in ihrer Mitte eine Ausnehmung (4) aufweist, in der mittig eine auf die Tragachse (T) eines Fahrzeughubarmes aufsteckbare Bundnabe (1) begrenzt pendelnd gehalten ist, deren Zylinderachse in der Ausgangslage rechtwinklig durch die Längsmittellinie (L) der Container-Wägevorrichtung verläuft, wobei die Bundnabe (1) oben eine Pfanne (2) trägt, in die von oben eine in der Platte (5) geführte Schneide (3) kippbar eingreift, die die über der Bundnabe (1) befestigte Druckmeßdose (8) bei beliebigen Schräglagen kräftefrei zur Wägung beaufschlagt, während das waagebalkenartige Koppelglied (K) um einen auf einer Verlängerung (5b) der Platte (5) sowie auf der Längsmittellinie (L) angeordneten Drehpunkt schwenkbar gehalten ist und symmetrisch zum Drehpunkt jeweils eine Einhängeöffnung (6 und 7) für die Hubketten oder -seile des Containers aufweist.

2. Container-Wägevorrichtung nach Anspruch 1,
dadurch gekennzeichnet,
daß die Platte (5) der Rahmenkonstruktion rechteckförmige Gestalt besitzt, oben und unten dachähnliche, symmetrisch zur Rechteck-Längsmittellinie (L) angeordnete und angeformte Verlängerungen (5a, 5b) aufweist und die Ausnehmung (4) in der Mitte im wesentlichen rechteckförmig ausgebildet ist,
daß die Platte (5) etwa auf der Mitte ihrer Länge und exakt auf der Mitte ihrer Breite mittels der, außen etwa quaderförmigen, mit Spiel in der Ausnehmung (4) der Platte (5) gehaltenen Bundnabe (1), deren Zylinderachse in der Ausgangslage rechtwinklig durch die Längsmittellinie (L) verläuft, auf die zum Heben vorgesehene Tragachse (T) des jeweiligen Hubarmes (H) parallel zur Hubebene der Hubarme (H) pendelnd aufgenommen ist,
daß auf der Oberseite der quaderförmigen Außenform der Bundnabe (1) als Pfanne (2) eine auf ihrer Oberseite breitwinklig keilförmig, genutete Leiste mit rechtwinklig zur Längsmittellinie (L) der Platte (5) verlaufender Keilscheitellinie befestigt ist,
daß die Druckmeßdose (8) mit ihrer Auflage- oder Widerlagerseite nach oben weisend und mit ihrer Druckachse koaxial zur Längsmittellinie (L) der Platte (5) am oberen Ende der Ausnehmung (4) der Platte (5) befestigt ist,
daß eine nach unten weisende Druck- oder Belastungsplatte der Druckmeßdose (8) von oben auf einer, zwischen zwei beidseitig, die Ausnehmung der Platte (5) oben überdeckenden Halteplatten (9, 10) begrenzt höhenbeweglich in der Ausnehmung (4) geführten Leiste als Schneide (3) aufliegt, deren unteres Ende keilförmig mit spitzerem Winkel als die Pfanne (2) in dieser Pfanne (2) Linienförmig aufliegt,
daß die Halteplatten (9, 10) nach unten über die Leiste mit Pfanne (2) ragen,
daß die Leiste mit der Pfanne (2) mit Spiel zwischen den Halteplatten (9, 10) geführt ist,
daß die Platte (5) mit der Druckmeßdose (8) und der Schneide (3) usw. selbstätig mit ihrer Längsmittellinie (L) in eine vom Lot abweichende Schräglage einstellbar ist, wenn die in den jeweiligen Container eingehängten Hubseile belastet eine vom Lot abweichende Ebene definieren,
und daß dabei die Längsmittellinie (L) der Platte (5) und der Druckmeßdose (8) eine mit der von den gespannten Hubketten oder -seilen definierten Ebene fluchtende Lage einnimmt.

3. Container-Wägevorrichtung nach Anspruch 1 oder 2,
dadurch gekennzeichnet,
daß die Tragachsen (T) der Hubarme (H) verlängert ausgebildet sind,
und daß die Naben (1) auf den Tragachsen (T) verschiebbar sind, bis die von den Ketten definierte Ebene eine Lotebene ist.

4. Container-Wägevorrichtung nach Anspruch 1 oder 2,
dadurch gekennzeichnet,
daß die Tragachsen (T) als ein in beiden Hubarmen (H) gehaltener, durchgehender zylindrischer Stab ausgebildet sind,
daß die Naben (1) gleitreibungsarm auf dem Stab angeordnet sind,
und daß die Naben (1) unter Last selbstätig auf dem Stab verschiebbar sind, bis die von den belasteten Ketten definierten Ebenen Lotebenen sind.

5. Container-Wägevorrichtung nach einem der Ansprüche 1 bis 4,
dadurch gekennzeichnet,
daß im unteren Bereich der Ausnehmung (4) zwischen zwei Führungsplatten (9, 10) eine Leiste befestigt ist, welche eine am oberen Rand angeformte Stufe (12) aufweist,
und daß diese Stufe (12) nach oben bis unter die Bunde der Bundnabe (1) ragt.

6. Container-Wägevorrichtung nach einem der Ansprüche 1 bis 5,
dadurch gekennzeichnet,
daß die Druckmeßdose (8) mittels einer koaxial zur Platten-Längsmittellinie (L) am oberen Ende der Platte (5) angeordneten Halteschraube (11) auswechselbar befestigt ist.

7. Container-Wägevorrichtung nach einem der Ansprüche 1 bis 6,
dadurch gekennzeichnet,
daß die obere, dachartige Verlängerung (5a) der Platte beidseitig mit Platten (14) verstärkt ist, deren Unterkanten als ein breitflächiges Widerlager für die Druckmeßdose (8) ausgebildet sind.

## Claims

1. Device for weighing containers on a container lift truck with a lifting mechanism comprising a pair of liftable and lowerable lifting arms (H) linked to the rear of said truck which are fitted with lifting chains or ropes adapted to be attached to the free ends thereof, each of said lifting arm ends having a weighing device (W) floatingly attached to it on a horizontal axle (T) extending at right angles to the lifting arm length, said weighing device consisting of a frame structure in which a load cell (8) is accommodated and the lower end of which is provided with a centrally disposed coupler link (K) in the form of a weighbeam extending parallel to the lifting plane of said lifting arms (H) whose ends are provided with holes adapted to receive weighing ropes, **characterized in that** the frame structure comprises an upright plate member (5) with a central recess (4) for a collared hub (1) slipped on a carrying axle (T) of one of the truck lifting arms to be concentrically retained in such that a restricted amount of floating movement is allowed, the cylinder axis of said collared hub extending at right angles through the longitudinal centerline (L) of the container weighing device while in initial position and the top of said collared hub (1) carrying a cup member (2) into which a knife edge (3) tiltably engages from above to impart load to the load cell (8) on top of said collared hub (1) in the absence of constraint in case of any skew positions for weighing while the weighbeam shaped coupler link (K) is tiltable about a pivot disposed on an extension (5b) of said plate member (5) as well as on said longitudinal centerline (L) and provided with attachment openings (6 and 7) for the container lifting chains or ropes each in symmetrical relation to said pivot.

2. Device for weighing containers according to claim 1, **characterized in that** the plate member (5) of the frame structure is of rectangular shape and provided with top and bottom roof-shaped extensions(5a, 5b) which extend symmetrically to said longitudinal centerline (L); that the central recess (4) is of essentially rectangular shape; that substantially in center of its length and exactly in center of its width said plate member (5) is floatingly received by the carrying axle (T) provided for load lifting of the respective lifting arm (H) parallel to the lifting plane of the lifting arms (H) with the aid of the collared hub (1) which has a substantially parallepiped outer contour, which is retained in the recess (4) of the plate member (1) with play and whose cylinder axis extends at right angles through the longitudinal centerline (L) while in initial position; that on top of the parallelepiped portion of the collared hub (1) there is a grooved ledge secured to serve as cup (2) which has a wide-angled wedge surface whose apex line extends at right angles to the logitudinal centerline (L) of the plate member (5); that the load cell (8) is attached with its support or abutment side facing upward and with its pressure axis extending coaxially to the longitudinal centerline (L) of the plate member (5) at the upper end of said recess (4) thereof; that a downward facing pressure or load plate of said load cell (8) is disposed on top of a ledge to serve as knife edge which is guided in said recess (4) in a manner permitting a restricted vertical movement intermediately of two retainer plate members (9, 10) overlapping said recess of the plate member (5) from above, the lower end of said ledge being linearly received in said cup (2) in wedge fashion at an angle which is more acute than that of the cup (2); that the retainer plates (9, 10) are protruding downward beyond the ledge with cup (2); that the ledge with cup (2) is guided between the retainer plates (9, 10) in a manner permitting a certain amount of play; that the plate (5) with load cell(8) and knife edge (3) etc. is provided such that its longitudinal centerline (L) is self-adjustable into an angular position in deviation from normal when the lifting ropes attached to the respective container are defining a plane deviating from normal while loaded; and that in this condition the longitudinal centerline (L) of said plate member (5) and said load cell (8) is taking a position which is in alignment with a plane defined by the tensioned lifting chains or ropes.

3. Device for weighing containers according to claim 1 or 2, **characterized in that** the load carrying axles (T) of the lifting arms (H) are provided with exensions and that the hubs (1) on said axles (T) are shiftable until the plane defined by the chains is a perpendicular plane.

4. Device for weighing containers according to claim 1 or 2, **characterized in that** the load carrying axles T are provided in the form of a cylindrical continuous bar which is retained in both lifting arms (H); that the hubs (1) are disposed on said bar such as to minimize sliding friction; and that said hubs (1) are self-shiftable on the bar under load until the planes defined by the loaded chains are perpendicular planes.

5. Device for weighing containers according to any of the preceding claims 1 to 4, **characterized in that** a ledge is attached in the lower part of said recess (4) between two guide plates (9, 10) which ledge has a step portion (12) provided along its upper marginal edge; and that said step portion (12) protrudes upward to underneath the collars of the hub (1).

6. Device for weighing containers according to any of the preceding claims 1 to 5, **characterized in that** the load cell (8) is detachably secured by means of a holding screw (11) disposed in coaxial relation to the longtiduinal centerline (L) of the plate member (5) at the upper end thereof.

7. Device for weighing containers according to any of the preceding claims 1 to 6, **characterized in that** the upper roof-shaped extention (5a) of the plate is reinforced with plate members (14) on both sides whose lower edges are adapted to provide a large-area abutment to receive the load cell (8).

## Revendications

1. Dispositif pour peser les conteneurs sur un véhicule élévateur de conteneurs, dont le dispositif élévateur de conteneurs présente à l'arrière du véhicule deux bras d'élévation (H) pouvant se lever et s'abaisser et dont les extrémités libres présentent des dispositifs de couplage pour les chaînes ou des cordes d'élévation qui s'accrochent aux conteneurs, à chaque extrémité du bras d'élévation se trouvant fixé pendulairement sur un arbre (T) horizontal à angle droit par rapport à la longueur du bras d'élévation, un dispositif de pesage (W) composé d'une structure dans laquelle est placée une boîte dynamométrique (8) et ayant au centre de son extrémité inférieure un couplage articulé (K) ressemblant à un traversin de balance et parallèle au plan d'élévation des bras d'élévation (H) et dont les extrémités sont munies de trous permettant l'accrochage des cordes de pesée,
caractérisé par le fait
que la structure est composée d'une plaque surélevée (5) présentant en son milieu un creux (4) au centre duquel est fixé de manière semi-oscillante un moyeu à embase (1) pouvant s'emboîter sur l'arbre porteur (T) d'un bras d'élévation de véhicule et dont l'axe cylindrique est, en position initiale, à angle droit par rapport à l'axe longitudinal (L) du dispositif pour peser les conteneurs, le moyeu à embase (1) portant en haut un étrier (2) dans lequel mord une lame (3) pendulaire conduite par le haut dans la plaque (5) qui, dans n'importe quelle position inclinée amène la boîte dynamométrique (8) fixée sur le moyeu à embase (1) à peser librement, tandis que le couplage articulé ressemblant à un traversin de balance (K) peut pivoter autour d'un point fixe situé sur un prolongement (5b) de la plaque (5) ainsi que sur l'axe longitudinal (L) et présente symétriquement par rapport au point fixe deux ouvertures d'accrochage (6 et 7) pour les chaînes ou les cordes de levée du conteneur.

2. Dispositif pour peser les conteneurs conformément à la revendication 1,
caractérisé par le fait
que la plaque (5) de la structure qui est de forme rectangulaire, présente en haut et en bas des prolongements (5a, 5b) ressemblant à des toits et fixés symétriquement par rapport à l'axe longitudinal à angle droit (L) et que le creux (4) situé en son milieu est pour l'essentiel de forme rectangulaire,
que la plaque (5), au milieu environ de sa longueur et exactement au milieu de sa largeur est, par l'intermédiaire du moyeu à embase (1) qui est extérieurement approximativement parallélépipédique et fixé avec du jeu dans le creux (4) de la plaque (5) et dont l'axe cylindrique en position initiale forme un angle droit par rapport à l'axe longitudinal (L), contenue de manière pendulaire dans l'arbre porteur prévu pour l'élévation (T) du bras d'élévation concerné (H), parallèlement au plan d'élévation du bras d'élévation (H),
que, sur la partie supérieure de la forme extérieure parallélépipédique du moyeu à embase (1), est fixée en tant qu'étrier (2) une barre à encoches dont la partie supérieure est largement cunéiforme et dont la ligne du sommet est à angle droit par rapport à l'axe longitudinal (L),
que la boîte dynamométrique (8) indique le haut avec sa surface portante ou de contre-appui et est fixée avec son arbre de pression coaxialement par rapport à l'axe longitudinal (L) de la plaque (5), à l'extrémité supérieure du creux (4) de la plaque (5),
qu'une plaque de pression ou de charge de la boîte dynamométrique (8) qui indique le bas repose de haut en bas sur une barre à déplacement vertical limité servant de lame (3) introduite dans le creux (4) entre deux plaques de support (9, 10) recouvrant en haut des deux côtés le creux de la plaque (5), dont l'extrémité inférieure cunéiforme avec un angle plus pointu que l'étrier (2) repose linéairement dans cet étrier (2),
que les plaques de support (9, 10) se dressent vers le bas au-dessus de la barre avec étrier (2),
que la barre avec étrier (2) est conduite avec du jeu entre les plaques de support (9, 10),
que la plaque (5) avec la boîte dynamométrique (8) et la lame (3), etc. est automatiquement réglable avec son axe longitudinal (L) dans une position inclinée différente de la verticale perpendiculaire, lorsque les cordes de levée accrochées aux divers conteneurs définissent en charge un plan différent de la verticale perpendiculaire,
et que l'axe longitudinal (L) de la plaque (5) et de la boîte dynamométrique (8) prend alors une position en alignement avec le plan défini par les chaînes ou les cordes de levée tendues.

3. Dispositif pour peser les conteneurs conformément aux revendications 1 ou 2,
caractérisé par le fait
que les arbres porteurs (T) des bras d'élévation (H) sont de forme prolongée,
et que les moyeux (1) peuvent être déplacés sur les arbres porteurs (T) jusqu'à ce que le plan défini par les chaînes soit un plan vertical.

4. Dispositif pour peser les conteneurs conformément aux revendications 1 ou 2,
caractérisé par le fait
que les arbres porteurs (T) ont la forme d'une barre cylindrique continue tenue dans les deux bras d'élévation (H),
que les moyeux (1) sont disposés sur la barre de manière à avoir peu de friction de glissement,
et que les moyeux (1) soumis à une charge se déplacent automatiquement sur la barre jusqu'à ce que les plans définis par les chaînes soient des plans verticaux.

5. Dispositif pour peser les conteneurs conformément aux revendications 1 à 4,
caractérisé par le fait
que dans la partie inférieure du creux (4), entre deux plaques de guidage (9, 10), est fixée une barre qui présente un degré rattaché au bord supérieur,
et que ce degré (12) se dresse vers le haut jusque sous l'attache du moyeu à embase.

6. Dispositif pour peser les conteneurs conformément aux revendications 1 à 5,
caractérisé par le fait
que la boîte dynamométrique (8) est fixée de manière détachable à l'extrémité supérieure de la plaque (5) par l'intermédiaire d'une vis de retenue (11) disposée coaxialement par rapport à l'axe longitudinal (L).

7. Dispositif pour peser les conteneurs conformément aux revendications 1 à 6,
caractérisé par le fait
que le prolongement supérieur en forme de toit (5a) de la plaque est renforcé des deux côtés par des plaques (14) dont les bords inférieurs servent de large contre-appui à la boîte dynamométrique (8).
